(19) Europäisches Patentamt
European Patent Office
Office européen des brevets

(11) **EP 2 192 645 B1**

(12) **EUROPEAN PATENT SPECIFICATION**


(45) Date of publication and mention of the grant of the patent:
**30.11.2011 Bulletin 2011/48**

(21) Application number: **08827759.5**

(22) Date of filing: **20.08.2008**

(51) Int Cl.:
***H01M 8/02*** *(2006.01)*
***C08F 2/00*** *(2006.01)*
***C08F 8/44*** *(2006.01)*
***H01B 1/06*** *(2006.01)*
***H01B 13/00*** *(2006.01)*
***H01M 8/10*** *(2006.01)*

(86) International application number:
**PCT/JP2008/064814**

(87) International publication number:
**WO 2009/025291 (26.02.2009 Gazette 2009/09)**


(54) **SEPARATION MEMBRANE FOR DIRECT LIQUID FUEL CELL AND METHOD FOR PRODUCING THE SAME**

TRENNMEMBRAN FÜR EINE DIREKT-FLÜSSIGBRENNSTOFFZELLE UND HERSTELLUNGSVERFAHREN DAFÜR

MEMBRANE DE SÉPARATION POUR UNE PILE À COMBUSTIBLE LIQUIDE DIRECTE ET SON PROCÉDÉ DE FABRICATION


(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.08.2007 JP 2007217448**

(43) Date of publication of application:
**02.06.2010 Bulletin 2010/22**



(73) Proprietor: **Tokuyama Corporation**
**Shunan-shi, Yamaguchi-ken 745-8648 (JP)**

(72) Inventors:
- **ISOMURA, Takenori**
**Shunan-shi**
**Yamaguchi 745-8648 (JP)**
- **FUKUTA, Kenji**
**Shunan-shi**
**Yamaguchi 745-8648 (JP)**

(74) Representative: **Gulde Hengelhaupt Ziebig & Schneider**
**Patentanwälte - Rechtsanwälte**
**Wallstrasse 58/59**
**10179 Berlin (DE)**



(56) References cited:
**EP-A1- 1 796 194**
**JP-A- 11 135 137**
**JP-A- 11 335 473**
**JP-A- 2003 157 862**
**JP-A- 2004 055 165**
**JP-A- 2007 188 788**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).





Printed by Jouve, 75001 PARIS (FR)

## Description

### TECHNICAL FIELD

The present invention relates to a membrane for a direct liquid fuel cell and a manufacturing process therefor. In the membrane, a resin constituting the membrane has an aromatic ring having a particular functional group at a predetermined position. The membrane has a feature of reduced permeability of a liquid fuel such as methanol.

### BACKGROUND OF THE INVENTION

A polymer electrolyte fuel cell is a fuel cell using a solid polymer such as an ion-exchange resin as an electrolyte. This fuel cell is characterized in that an operation temperature is relatively lower.

The polymer electrolyte fuel cell has a basic structure as shown in FIG. 1, where a space inside of cell partition walls 1a and 1b is divided by an assembly 10. The assembly 10 comprises a solid polymer electrolyte membrane 6, to whose sides a fuel diffusion electrode 4 and an oxidizing agent diffusion electrode 5 are attached, respectively. The assembly 10 divides the space inside of the cell partition walls 1a and 1b, to form a fuel chamber 7 and an oxidizing-agent chamber 8 inside of the cell partition walls. The fuel chamber 7 is communicated with the outside of the cell through a fuel channel 2 formed in the cell partition wall 1a. The oxidizing-agent chamber 8 is communicated with the outside through an oxidizing-agent channel 3 formed in the cell partition wall 1b.

In a polymer electrolyte fuel cell having the basic structure as described above, a fuel such as hydrogen gas and methanol is supplied to the fuel chamber 7 through channel 2. Meanwhile, an oxygen-containing gas such as oxygen or air to be an oxidizing agent is supplied to the oxidizing-agent chamber 8 through the oxidizing-agent channel 3. When, in this state, these diffusion electrodes 4 and 5 are connected to an external load circuit (not shown), the fuel cell supplies electric energy to the external circuit by the reaction mechanism as described below.

When a cation-exchange type electrolyte membrane is used as the solid polymer electrolyte membrane 6, in the fuel diffusion electrode 4, a catalyst contained in the electrode is brought into contact with a fuel, to generate protons. Protons (hydrogen ions) thus generated are conducted through the solid polymer electrolyte membrane 6 toward the oxidizing-agent chamber 8. Protons which have reached the oxidizing-agent chamber react with oxygen in the oxidizing agent by the action of the catalyst contained in the oxidizing agent diffusion electrode 5 to generate water. Meanwhile, electrons generated coincidentally with protons in the fuel diffusion electrode 4 pass through the external load circuit to the oxidizing agent diffusion electrode 5. The external load circuit utilizes energy generated by the above reaction mechanism as electric energy.

In a polymer electrolyte fuel cell using a cation-exchange type electrolyte membrane as the solid polymer electrolyte membrane, a perfluorocarbon sulfonic acid resin membrane is most commonly used as a cation-exchange type electrolyte membrane. The following problems have been pointed out for a cation-exchange type fuel cell using a perfluorocarbon sulfonic acid resin membrane as an electrolyte membrane.

(i) Since the reaction is conducted under a strongly acidic atmosphere, only a noble-metal catalyst resistant to an acidic atmosphere can be used as a catalyst. Furthermore, a perfluorocarbon sulfonic acid resin membrane is expensive, so that there is a limit on reducing a cost required for producing a fuel cell.

(ii) Since a perfluorocarbon sulfonic acid resin membrane is insufficiently water-retentive, water must be supplied during operating a fuel cell.

(iii) Since a perfluorocarbon sulfonic acid resin membrane is not physically strong, an electric resistance cannot be reduced by thinning a membrane.

(iv) A perfluorocarbon sulfonic acid resin membrane is highly permeable to methanol. Thus, while a fuel cell employing methanol as a fuel, methanol reaches an oxidizing agent diffusion electrode. The methanol reacts with oxygen or air on the surface of a diffusion electrode to increase an overvoltage. As a result, an output voltage of the fuel cell is reduced.

For solving the above problems, particularly the problem (i), there has been investigated substituting a hydrocarbon anion-exchange membrane for a perfluorocarbon sulfonic acid resin membrane as a membrane, and there are several proposals (Patent Reference Nos. 1 to 3).

In a polymer electrolyte fuel cell using an anion-exchange membrane, ion species moving within the solid polymer electrolyte membrane 6 are different from ion species in a fuel cell using a cation-exchange membrane. A polymer electrolyte fuel cell using an anion-exchange membrane generates electric energy by the following mechanism. Specifically, by feeding a fuel such as hydrogen and methanol to the fuel chamber and oxygen and water to the oxidizing-agent chamber, in the oxidizing agent diffusion electrode 5, a catalyst contained in the electrode is brought in contact with oxygen and water to generate hydroxide ions ($OH^-$). These hydroxide ions are conducted through the solid polymer

electrolyte membrane 6 which is the above hydrocarbon anion-exchange membrane, to the fuel chamber 7. The hydroxide ions thus conducted react with the fuel supplied to the fuel diffusion electrode 4 to generate water and electrons. Electrons generated in the fuel diffusion electrode 4 are conducted through an external load circuit to the oxidizing agent diffusion electrode 5. A fuel cell utilizes energy generated in the reaction as electric energy.

In general, a direct liquid fuel cell using the above hydrocarbon anion-exchange membrane significantly relieves not only the problem (i) but also the problems (ii) and (iii). Furthermore, when applying current, hydroxide ions with a larger ion diameter move from the oxidizing-agent chamber toward the fuel chamber and the movement suppresses the opposite direction movement of methanol, therefore the problem (iv) is expected to be substantially relieved.

As an anion exchange group in a membrane for a direct liquid fuel cell using a hydrocarbon anion-exchange membrane having such advantages, a quaternary ammonium group is very preferable (Patent Reference Nos. 1 to 3). It is because it is highly ion-conductive and raw materials for producing the anion-exchange membrane are readily available.

A hydrocarbon anion-exchange membrane having a quaternary ammonium group as an anion exchange group (hereinafter, this anion-exchange membrane can be simply referred to as a "quaternary ammonium type hydrocarbon anion-exchange membrane") is generally produced by the process described below.

First, a polymerizable composition consisting of a polymerizable monomer having a halogenoalkyl group such as chloromethylstyrene and a crosslinkable polymerizable monomer is brought into contact with a porous membrane and pores of the porous membrane are filled with the polymerizable composition. Then, the loaded polymerizable composition is polymerized to provide a cross-linked hydrocarbon resin having a halogenoalkyl group. Subsequently, the halogenoalkyl group is converted to a quaternary ammonium group and the counter ions to the quaternary ammonium group is exchanged with hydroxide ions.

Patent Reference No. 1: JP1999-135137A
Patent Reference No. 2: JP1999-273695A
Patent Reference No. 3: JP2000-331693A

## DISCLOSURE OF INVENTION

### TECHNICAL PROBLEM

However, when a direct liquid fuel cell was assembled using a quaternary ammonium type hydrocarbon anion-exchange membrane as a membrane and practically operated, this membrane was somewhat less dense and did not reduce methanol permeability in the above item (iv) to an expected extent. As a result, this fuel cell did not give a high output as expected.

For making the above anion-exchange membrane sufficiently non-permeable to methanol, a thickness of the anion-exchange membrane could be considerably increased or its degree of cross-linking could be significantly increased. However, when such a method is employed, nonpermeability to methanol as described above can be improved, but a resistance of an ion-exchange membrane is considerably increased. Consequently, a resultant fuel cell cannot have a high cell output.

As described above, there has not been reported a direct liquid fuel cell employing a quaternary ammonium type hydrocarbon anion-exchange membrane as a solid polymer electrolyte membrane, which has an adequately low permeability to methanol, a low membrane resistance and resultantly give a high cell output.

In view of the background described above, an objective of the present invention is to develop a membrane for a direct liquid fuel cell which can offer excellent performance in terms of both methanol permeability and membrane resistance.

### TECHNICAL SOLUTION

To solve the above problems, the inventors have intensely investigated a membrane consisting of a porous membrane as a substrate and an ion-exchange resin filling the pores in the porous membrane. We have finally conceived the use of an aromatic polymerizable monomer having a particular chemical structure as a main component of a polymerizable composition used as a raw material for producing the above ion-exchange resin. This aromatic polymerizable monomer has an aromatic ring having at least one halogenoalkyl group and at least one inert group which is inert to a reaction converting the halogenoalkyl group into a quaternary ammonium group. A membrane obtained using this monomer has a specifically lower permeability to a liquid fuel (particularly, methanol), compared with that obtained using another aromatic polymerizable monomer.

We have also conceived the use of an aromatic polymerizable monomer which has an aromatic ring having at least one halogenoalkyl group and at least one alkoxy or acyloxy group, as a main component of a polymerizable

composition filling pores in a porous membrane. A membrane in which the pores are filled with an ion-exchange resin having a hydroxy group derived from the alkoxy or acyloxy group after polymerizing the polymerizable composition containing the polymerizable monomer has a specifically lower permeability to a liquid fuel (particularly, methanol), compared with a membrane in which pores are filled with an ion-exchange resin without the above hydroxy group.

The present invention described below has been achieved on the basis of the above findings.

[1] A process for manufacturing a membrane for direct liquid fuel cell comprising a porous membrane and a cross-linked anion-exchange resin filling the pores in the porous membrane, wherein said cross-linked anion-exchange resin has a methylene main chain having a cross-linked structure and an aromatic ring attached to said methylene main chain and said aromatic ring has an inert group which is inert to a reaction converting a halogenoalkyl group into a quaternary ammonium group and a quaternary ammonium group, comprising
contacting the porous membrane with a polymerizable composition comprising

a) an aromatic polymerizable monomer having an aromatic ring to which one polymerizable group, at least one halogenoalkyl group and an inert group which is inert to a reaction converting said at least one halogenoalkyl group into a quaternary ammonium group,
b)a crosslinkable polymerizable monomer, and
c) a polymerization initiator; to fill the pores of the porous membrane with said polymerizable composition;
then curing said polymerizable composition by polymerization to give a resin cured product; and
then converting said halogenoalkyl group in said resin cured product into a quaternary ammonium group.

[2] The process for manufacturing a membrane for a direct liquid fuel cell as described in [1], wherein the inert group which is inert to the reaction converting the halogenoalkyl group into a quaternary ammonium group is selected from the group consisting of an alkyl group, a halogen atom and an alkoxy group.

[3] The process for manufacturing a membrane for a direct liquid fuel cell as described in [1], wherein the aromatic polymerizable monomer is a monocyclic aromatic polymerizable monomer.

[4] The process for manufacturing a membrane for a direct liquid fuel cell as described in [3], wherein the monocyclic aromatic polymerizable monomer has a styrene skeleton.

[5] A process for manufacturing a membrane for direct liquid fuel cell comprising a porous membrane and a cross-linked anion-exchange resin filling the voids in said porous membrane, wherein said cross-linked anion-exchange resin has a methylene main chain having a cross-linked structure and an aromatic ring attached to said methylene main chain and said aromatic ring has a hydroxy group and a quaternary ammonium group, comprising
contacting the porous membrane with a polymerizable composition comprising

a) an aromatic polymerizable monomer having an aromatic ring to which one polymerizable group, at least one halogenoalkyl group and at least one alkoxy and/or acyloxy group,
b)a crosslinkable polymerizable monomer, and
c) a polymerization initiator;
to fill the pores of the porous membrane with said polymerizable composition;
then curing said polymerizable composition by polymerization to give a resin cured product;
then hydrolyzing an alkoxy or acyloxy group attached to said resin cured product to convert said alkoxy or acyloxy group to a hydroxy group; and
then converting said halogenoalkyl group attached to said resin cured product into a quaternary ammonium group.

[6] The process for manufacturing a membrane for a direct liquid fuel cell as described in [5], wherein the aromatic polymerizable monomer is a monocyclic aromatic polymerizable monomer.

[7] The process for manufacturing a membrane for a direct liquid fuel cell as described in [6], wherein the monocyclic aromatic polymerizable monomer has a styrene skeleton.

[8] A membrane for direct liquid fuel cell consisting of a porous membrane and a cross-linked anion-exchange resin filling the pores in said porous membrane, wherein said anion-exchange resin has a methylene main chain having a cross-linked structure and an aromatic ring attached to said methylene main chain and said aromatic ring has an inert group which is inert to a reaction converting a halogenoalkyl group into a quaternary ammonium group and a quaternary ammonium group.

[9] The membrane for a direct liquid fuel cell as described in [6], wherein the inert group in the reaction converting into a quaternary ammonium group is an alkoxy group.

[10] The membrane for a direct liquid fuel cell as described in [8], wherein the inert group in the reaction converting into a quaternary ammonium group is a halogen atom.

[11] The membrane for a direct liquid fuel cell as described in [8], wherein the inert group in the reaction converting into a quaternary ammonium group is an alkyl group.

[12] The membrane for a direct liquid fuel cell as described in [8], wherein the inert group in the reaction converting into a quaternary ammonium group is a hydroxy group.

[13] The membrane for a direct liquid fuel cell as described in [8], wherein the cross-linked structure is a cross-linked structure in which a diethylbenzene skeleton links methylene main chains.

The process for manufacturing a membrane of the present invention employs an aromatic polymerizable monomer having an aromatic ring to which at least one halogenoalkyl group and at least one inert group which is inert to a reaction converting the halogenoalkyl group into a quaternary ammonium group, as a starting material for preparing an anion-exchange resin which is constituting the membrane. As a result, the inert group contained in the resultant anion-exchange resin can effectively reduce permeation of a liquid fuel through the anion-exchange resin.

In particular, when this inert group is an alkyl group, a halogen atom or an alkoxy group, hydrophobicity is properly increased around a quaternary ammonium group in an anion-exchange resin constituting a membrane, resulting in significant reduction in permeability of a liquid fuel. In other words, this membrane maintains a certain ion-exchange capacity and proper cross-linking while hydrophobicity in the membrane is considerably increased. The presence of proper cross-linking inhibit swelling of the membrane by a liquid fuel and further effectively prevent permeation of a liquid fuel.

When being used as a membrane for a direct liquid fuel cell, a membrane obtained by the manufacturing process of the present invention significantly reduce permeability of a liquid fuel, particularly methanol without excessively increasing an electric resistance of a membrane. That is, this membrane for a direct liquid fuel cell realizes both high nonpermeability to a liquid fuel and a lower membrane resistance, which cannot be achieved by the prior art.

Another process for manufacturing a membrane of the present invention employs a polymerizable monomer having an alkoxy or acyloxy group as a starting material for an anion-exchange resin constituting a membrane. The alkoxy or acyloxy group is hydrolyzed to convert into a hydroxy group in a later step. A hydroxy group present in a membrane thus prepared is a group inert to a reaction converting a halogenoalkyl group into a quaternary ammonium group, like an alkyl group, a halogen atom and an alkoxy group, which have been listed above. A hydroxy group is not a hydrophobic group unlike the alkyl group described above. However, by introducing a hydroxy group in an ion-exchange resin, a membrane realize both non-permeability of a liquid fuel and a lower membrane resistance. The reason can be supposed to be as described below.

Introduction of a hydrophilic hydroxy group into an anion-exchange resin leads to increase in a water content of a membrane. However, increase of a water content is not so high as in the case of introduction of a highly hydrophilic anion-exchange group. In general, when a water content is increased in an ion-exchange resin, an increase rate in a transfer speed of hydroxide ions in the ion-exchange resin is larger than that of methanol. Therefore, introduction of a hydroxy group into an ion-exchange resin can effectively reduce a membrane resistance without significantly increasing fuel permeability through a membrane.

As described above, by properly increasing a cross-linking degree of the ion-exchange resin, adjusting the amount of introducing anion exchange groups and introducing a hydroxy group into the ion-exchange resin, a membrane having improved characteristics as a membrane into which the above hydrophobic group is introduced can be obtained.

A direct liquid fuel cell having a membrane produced by a manufacturing process of the present invention has a low internal resistance of the cell and reduced cross-over of a liquid fuel such as methanol. As a result, a direct liquid fuel cell having this membrane has a higher cell output.

## BRIEF DESCRIPTION OF THE DRAWINGS

[Fig. 1]

FIG. 1 is a conceptual view illustrating a basic structure of a solid polymer type direct liquid fuel cell.

## EXPLANATION OF THE REFERENCE

1a, 1b: Cell partition wall, 2: fuel channel, 3: oxidizing-agent channel, 4: fuel diffusion electrode, 5: oxidizing agent diffusion electrode, 6: solid polymer electrolyte membrane, 7: fuel chamber, and 8: oxidizing-agent chamber.

## BEST MODE FOR CARRYING OUT THE INVENTION

A membrane for a direct liquid fuel cell of the present invention comprises a porous membrane and a cross-linked anion-exchange resin filling the pores in the porous membrane.

The cross-linked anion-exchange resin consists of a methylene main chain having a cross-linked structure and an aromatic ring attached to the methylene main chain. The aromatic ring has an inert group which is inert to a reaction converting a halogenoalkyl group into a quaternary ammonium group and a quaternary ammonium group.

In a first process for manufacturing this membrane, the pores formed in the porous membrane is filled with a

predetermined polymerizable composition, and then the polymerizable composition is polymerized to give a resin cured product, to which an anion-exchange group is introduced.

First manufacturing process

Polymerizable composition

A polymerizable composition contains, as essential components, a) an aromatic polymerizable monomer containing an aromatic ring having one polymerizable group, at least one halogenoalkyl group and at least one inert group which is inert to a reaction converting the at least one halogenoalkyl group into a quaternary ammonium group,
b) a crosslinkable polymerizable monomer, and
c) a polymerization initiator.
There will be detailed each essential component.

a) Aromatic Polymerizable monomer

The aromatic polymerizable monomer is a compound represented by chemical formula (1) containing an aromatic ring having one polymerizable group, at least one halogenoalkyl group and at least one inert group which is inert to a reaction converting the at least one halogenoalkyl group into a quaternary ammonium group.
[Chem. 1]

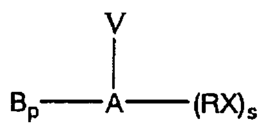

(1)

In chemical formula (1), V is a polymerizable group. The polymerizable group is preferably a hydrocarbon group with 2 to 5 carbon atoms having an unsaturated bond. Preferable examples include vinyl, propenyl and butylene. Vinyl is particularly preferable in the light of availability.
"A" is an aromatic ring. The aromatic ring may be a monocyclic ring or a polycyclic ring in which a plurality of aromatic rings are fused. Specific examples include a benzene ring, a naphthalene ring, an anthracene ring and derivatives of these. A monocyclic benzene ring is preferable in the light of possibility of increasing the anion-exchange group density in the anion-exchange resin and availability.
RX is a halogenoalkyl group. The alkyl group has preferably 1 to 10 carbon atoms, more preferably 1 to 5 carbon atoms. The halogen atom in the halogenoalkyl group is a chlorine, bromine or iodine atom, and among these halogen atoms, a chlorine atom is preferable in the light of availability.
Examples of the halogenoalkyl group include chloromethyl, chloroethyl, chloropropyl, chlorobutyl, chloropentyl, chlorohexyl, chlorooctyl, bromomethyl, bromoethyl, bromopropyl, bromobutyl, bromopentyl, bromohexyl, bromooctyl, iodomethyl, iodoethyl, iodopropyl, iodobutyl, iodopentyl, iodohexyl and iodooctyl.
"B" is an inert group which is inert to a reaction converting the halogenoalkyl group into a quaternary ammonium group. The term "reaction converting a halogenoalkyl group into a quaternary ammonium group" as used herein refers to an anion-exchange group introducing reaction conducted in producing a membrane using a polymerizable composition containing the aromatic polymerizable monomer. The reaction will be detailed later. There are no particular restrictions to this inert group which is inert to a reaction of conversion into a quaternary ammonium group, as long as it is unreactive to the reaction and stable during the use of the product as a membrane. Examples of the inert group include nitro, cyano and phenyl. These inert groups are effective in inhibiting permeation of a liquid fuel such as methanol in a membrane. However, in the light of effectiveness of inhibiting permeation of a liquid fuel and polymerizability in producing an anion-exchange resin, particularly preferred is an inert group selected from the group consisting of an alkyl group, a halogen atom and an alkoxy group. The most preferable inert group is an alkyl group.
A preferable alkyl group has 1 to 15 carbon atoms. Examples of the alkyl group include methyl, ethyl, n-propyl, iso-propyl, n-butyl, iso-butyl, tert-butyl, n-heptyl, n-hexyl, n-pentyl, n-octyl, n-nonyl, n-decanyl and stearyl.
An alkyl group having 2 to 15 carbon atoms is a preferable alkyl group because it more effectively inhibits permeation of a liquid fuel than a methyl group having one carbon atom. Particularly preferred is an alkyl group having 2 to 10 carbon atoms because it can effectively inhibit permeation of a liquid fuel and an electric resistance of a membrane

obtained is kept within a generally preferable range of use. Meanwhile, a methyl group having one carbon atom is also preferable in the light of availability and good polymerizability of a polymerizable monomer. In the light of higher effect of inhibiting permeation of a liquid fuel, a straight-chain alkyl group is better than a branched alkyl group.

Examples of the halogen atom include a fluorine, a chlorine, a bromine and an iodine atoms. Among these halogen atoms, a chlorine atom is preferable in the light of availability.

An alkoxy group is preferably an alkoxy group having 1 to 15 carbon atoms, more preferably an alkoxy group having 2 to 10 carbon atoms. Specific examples include methoxy, ethoxy, n-propoxy, iso-propoxy, n-butoxy, iso-butoxy, tert-butoxy, pentoxy, octyloxy, n-nonyloxy, n-decanyloxy and stearyloxy. As the alkyl group described as an inert group, an alkoxy group having 2 to 15, suitably 2 to 10 carbon atoms is more effective in inhibiting permeation of a liquid fuel than methoxy having one carbon atom.

Meanwhile, a methoxy group having one carbon atom is advantageous in availability of a polymerizable monomer, higher polymerizability and furthermore easiness in introducing a quaternary ammonium group.

In the formula, "s" is an integer representing the number of a halogenoalkyl group attached to the aromatic ring. "s" is at least one. As described later, this halogenoalkyl group is converted into a quaternary ammonium group which is an anion-exchange group, in the process of manufacturing a membrane. The number "s" of the halogenoalkyl group is generally up to 2, most preferably 1.

In the formula, "p" is an integer representing the number of the inert group. "p" is at least one. In general, the number "p" of the inert group is preferably 1 to 4, more preferably 1 to 2.

Here, $p+q \leq W-1$. W is the number of hydrogen atom attached to an unsubstituted aromatic ring. That is, W is 6, 8 and 10 when the aromatic ring is benzene, naphthalene and anthracene, respectively.

In this aromatic polymerizable monomer, a carbon atom in the aromatic ring to which the inert group is attached is preferably close to, particularly preferably adjacent to a carbon atom in the aromatic ring to which the halogenoalkyl group is attached, within the aromatic ring. In the light of a higher capability of inhibiting permeation of a liquid fuel in a membrane obtained, at least one of the inert group is preferably attached to the aromatic ring at a para position to the polymerizable group V. Attachment of the inert group at para position improves capability of inhibiting permeation of a liquid fuel in a membrane obtained and a lower electric resistance.

Examples of the aromatic polymerizable monomer represented by chemical formula (1) include the following compounds.

Examples of the monocyclic aromatic polymerizable monomer in which the inert group is an alkyl group include 2-methyl-4-chloromethylstyrene, 3-methyl-4-chloromethylstyrene, 2-methyl-3-chloromethylstyrene, 2-methyl-5- chloromethylstyrene, 4-methyl-3-chloromethylstyrene, 4-methyl-2-chloromethylstyrene, 4-ethyl-3-chloromethylstyrene, 4-propyl-3-chloromethylstyrene, 4-pentyl-3-chloromethylstyrene, 4-hexyl-3-chloromethylstyrene, 4-hexyl-3-chloromethylstyrene, 4-octyl-3-chloromethylstyrene, 4-methyl-3-chloroethylstyrene, 4-methyl-3-chloropropylstyrene, 4-methyl-3-chlorobutylstyrene, 4-methyl-3-iodomethylstyrene, 4-methyl-3-iodoethylstyrene, 4-methyl-3-iodopropylstyrene, 4-methyl-3-iodobutylstyrene, 4-methyl-3-iodopentylstyrene, and 4-methyl-3-iodomethylstyrene.

Examples of the monocyclic aromatic polymerizable monomer in which the inert group is a halogen atom include 2-chloro-4-chloromethylstyrene, 3-chloro-4-chloromethylstyrene, 2-chloro-3-chloromethylstyrene, 2-chloro-5-chloromethylstyrene, 4-chloro-3-chloromethylstyrene, 4-chloro-2-chloromethylstyrene, 4-iodo-3-chloromethylstyrene, 4-fluoro-3-chloromethylstyrene, 4-iodo-3-chloromethylstyrene, 4-chloro-3-chloroethylstyrene, 4-chloro-3-chloropropylstyrene, 4-chloro-3-chlorobutylstyrene, 4-chloro-3-iodomethylstyrene, 4-chloro-3-iodoethylstyrene, 4-chloro-3-iodopropylstyrene, 4-chloro-3-iodobutylstyrene, 4-chloro-3-iodopentylstyrene, and 4-chloro-3-iodomethylstyrene.

Examples of the monocyclic aromatic polymerizable monomer in which the inert group is an alkoxy group include 2-methoxy-4-chloromethylstyrene, 3-methoxy-4-chloromethylstyrene, 2-methoxy-3-chloromethylstyrene, 2-methoxy-5-chloromethylstyrene, 4-methoxy-3-chloromethylstyrene, 4-methoxy-2-chloromethylstyrene, 4-ethoxy-3-chloromethylstyrene, 4-propoxy-3-chloromethylstyrene, 4-butoxy-3-chloromethylstyrene, 4-methoxy-3-chloroethylstyrene, 4-methoxy-3-chloropropylstyrene, 4-methoxy-3-chlorobutylstyrene, 4-methoxy-3-iodomethylstyrene, 4-methoxy-3-iodoethylstyrene, 4-methoxy-3-iodopropylstyrene, 4-methoxy-3-iodobutylstyrene, 4-methoxy-3-iodopentylstyrene, and 4-methoxy-3-iodomethylstyrene.

Examples of the bicyclic aromatic polymerizable monomer in which the inert group is an alkyl group include 1-vinyl-3-methyl-4-chloromethylnaphthalene, 1-vinyl-6-methyl-4-chloromethylnaphthalene, 2-vinyl-5-methyl-6-chloromethylnaphthalene, 1-vinyl-3-ethyl-4-chloromethylnaphthalene, and 1-vinyl-3-butyl-4-chloromethylnaphthalene.

Examples of the bicyclic aromatic polymerizable monomer in which the inert group is a halogen atom include 1-vinyl-3-chloro-4-chloromethylnaphthalene, 1-vinyl-6-chloro-4-chloromethylnaphthalene, 2-vinyl-5-chloro-6-chloromethylnaphthalene, 1-vinyl-3-bromo-4-chloromethylnaphthalene, and 1-vinyl-3-fluoro-4-chloromethylnaphthalene.

Examples of the bicyclic aromatic polymerizable monomer in which the inert group is an alkoxy group include 1-vinyl-3-methoxy-4-chloromethylnaphthalene, 1-vinyl-6-methoxy-4-chloromethylnaphthalene, 2-vinyl-5-methoxy-6-chloromethylnaphthalene, 1-vinyl-3-ethoxy-4-chloromethylnaphthalene, and 1-vinyl-3-butoxy-4-chloromethylnaphthalene.

Examples of the tricyclic aromatic polymerizable monomer in which the inert group is an alkyl group include 1-vinyl-3-methyl-4-chloromethylanthracene, 1-vinyl-5-methyl-4-chloromethylanthracene, 2-vinyl-4-methyl-6-chloromethylanthracene, 2-vinyl-5-methyl-6-chloromethylanthracene, 1-vinyl-3-ethyl-4-chloromethylanthracene, and 1-vinyl-3-butyl-4-chloromethylanthracene.

Examples of the tricyclic aromatic polymerizable monomer in which the inert group is a halogen atom include 1-vinyl-3-chloro-4-chloromethylanthracene, 1-vinyl-5-chloro-4-chloromethylanthracene, 2-vinyl-4-chloro-6-chloromethylanthracene, 2-vinyl-5-chloro-6-chloromethylanthracene, 1-vinyl-3-bromo-4-chloromethylanthracene, and 1-vinyl-8-fluoro-4-chloromethylanthracene.

Examples of the tricyclic aromatic polymerizable monomer in which the inert group is an alkoxy group include 1-vinyl-3-methoxy-4-chloromethylanthracene, 1-vinyl-5-methoxy-4-chloromethylanthracene, 2-vinyl-4-methoxy-6-chloromethylanthracene, 2-vinyl-5-methoxy-6-chloromethylanthracene, 1-vinyl-3-ethoxy-4-chloromethylanthracene, and 1-vinyl-3-butoxy-4-chloromethylanthracene.

Among these aromatic polymerizable monomers, a monocyclic aromatic polymerizable monomer represented by chemical formula (2) is preferable.

[Chem. 2]

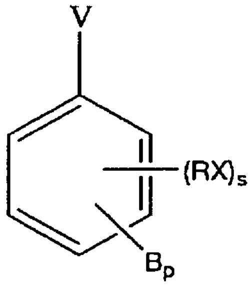

(2)

In chemical formula (2), V, RX, B, p and s are as described for chemical formula (1).

There are no particular restrictions to a content of the aromatic polymerizable monomer in the polymerizable composition, but it is preferably 60 to 99 % by weight, more preferably 75 to 98 % by weight to the total amount of the polymerizable monomer contained in the polymerizable composition. By controlling the content of the aromatic polymerizable monomer within the above range, permeability of a liquid fuel in the anion-exchange resin obtained can be reduced, swelling by the liquid fuel can be prevented effectively and an electric resistance can be sufficiently reduced.

b) Crosslinkable polymerizable monomer

A crosslinkable polymerizable monomer contained in the polymerizable composition can be any monomer used in the known production of an ion-exchange membrane without limitation. By adding the crosslinkable polymerizable monomer to the polymerizable composition, a resulting anion-exchange resin becomes cross-linked type. The cross-linked ion-exchange resin is essentially insoluble in a solvent. It is insoluble in water or an alcohol, swollen to a minimum degree, and is insoluble even when a large number of anion-exchange groups are incorporated into the resin. As a result, this membrane has an extremely reduced electric resistance.

Specific examples of the crosslinkable polymerizable monomer include divinyl compounds such as m-, p- and o-divinylbenzenes, divinyl sulfone, butadiene, chloroprene, isoprene, trivinylbenzenes, divinylnaphthalene, diallylamine, triallylamine and divinylpyridines.

There are no particular restrictions to a content of the crosslinkable polymerizable monomer in the polymerizable composition, it is preferably 1 to 40 % by weight, more preferably 2 to 25 % by weight to the total amount of the polymerizable monomer in the polymerizable composition. By controlling the content of the crosslinkable polymerizable monomer within the above range, permeability of a liquid fuel in the anion-exchange resin can be reduced, swelling can be further prevented and an electric resistance can be particularly low.

c) Polymerization initiator

The above polymerizable composition contains a polymerization initiator. There are no particular restrictions to the polymerization initiator, as long as it is a compound which can initiate polymerization of the above aromatic polymerizable monomer and the crosslinkable polymerizable monomer.

The polymerization initiator is preferably an organic peroxide. Examples include radical polymerization initiators such as octanoyl peroxide, lauroyl peroxide, t-butyl peroxy-2-ethylhexanoate, benzoyl peroxide, t-butyl peroxyisobutyrate, t-butyl peroxylaurate, t-hexyl peroxybenzoate, and di-t-butyl peroxide.

A content of the polymerization initiator in the polymerizable composition is appropriately selected, depending on a composition of the polymerizable monomer used and the type of the polymerization initiator by the law of the art. In general, the polymerization initiator is contained preferably 0.1 to 20 parts by weight, more preferably 0.5 to 10 parts by weight to 100 parts by weight of the total amount of the polymerizable monomer (when another polymerizable monomer described later is used, its content is included).

The polymerizable composition may contain, in addition to a) an aromatic polymerizable monomer described above, another aromatic polymerizable monomer to which an anion-exchange group can be introduced. Examples of the other aromatic polymerizable monomer include 2-chloromethylstyrene, 3-chloromethylstyrene, 4-chloromethylstyrene, 2-chloroethylstyrene, 3-chloroethylstyrene, 4-chloroethylstyrene, 2-chloropropylstyrene, 3-chloropropylstyrene, 4-chloropropylstyrene, 2-chlorobutylstyrene, 3-chlorobutylstyrene, 4-chlorobutylstyrene, 2-iodobutylstyrene, 3-iodobutylstyrene, 4-iodobutylstyrene, vinylxylene, α-methylstyrene, vinylnaphthalene, α-halogenated styrenes, and acenaphthylenes.

A content of the other aromatic polymerizable monomer is preferably 80 % by weight or less, more preferably 50 % by weight or less, most preferably 30 % by weight or less of the total amount of the polymerizable monomer contained in the polymerizable composition.

In addition to the essential components described above, the polymerizable composition may, if necessary, contain other components in a small amount for adjusting physical properties such as mechanical strength and reactivity such as polymerizability. The content of the other components is within the range where it is consistent with the objective of this invention.

Examples of the other components include other polymerizable monomers such as acrylonitrile, acrolein and methyl vinyl ketone; and plasticizers such as dibutyl phthalate, dioctyl phthalate, dimethyl isophthalate, dibutyl adipate, triethyl citrate, acetyl tributylcitrate and dibutyl sebacate.

When a polymerizable monomer as another component is contained in the polymerizable composition, its content is preferably 20 % by weight or less, more preferably 10 % by weight or less to the total amount of the polymerizable monomer components. The amount of a plasticizer is preferably 50 parts by weight or less to 100 parts by weight of the total amount of the polymerizable monomers.

<u>Porous membrane</u>

In the first manufacturing process for a membrane of the present invention, first, the above polymerizable composition is brought into contact with the porous membrane. By this contact, the pores in the porous membrane are filled with the polymerizable composition. Then, the polymerizable composition filling the pores is polymerized.

When an anion-exchange membrane produced using a porous membrane as a substrate is used as a membrane for a fuel cell, the porous membrane acts as a reinforcing material to increase physical strength of the membrane. This membrane, therefore, can have a smaller membrane thickness than that of an anion-exchange resin membrane without a porous membrane. As a result, an electric resistance of the membrane is reduced.

The porous membrane has internal voids such as fine pores. In the porous membrane, both sides are communicated through at least some voids. A porous membrane used in the present invention can be any known porous membrane having the above structure.

An average pore size in the porous membrane is preferably 0.01 to 2 μm, more preferably 0.015 to 0.4 μm. With an average pore size being less than 0.01 μm, filling with the anion-exchange resin becomes insufficient. With an average size being more than 2 μm, alcohol permeability tends to be too large.

A porosity of the porous membrane (also referred to as a "void percentage") is preferably 20 to 95 %, more preferably 30 to 90 %. With a porosity being more than 95 %, the membrane tends to have insufficient strength. With a porosity being less than 20 %, an electric resistance tends to be increased.

An air permeability (JIS P-8117) is preferably 1500 sec or less, more preferably 1000 sec or less. An air permeability within this range can reduce an electric resistance of a membrane for a fuel cell obtained and keep physical strength high.

A thickness is preferably 5 to 150 μm, more preferably 10 to 120 μm, particularly preferably 10 to 70 μm.

Surface flatness as a roughness index is preferably 10 μm or less, more preferably 5 μm or less. With flatness within this range, a membrane for a fuel cell obtained can have higher non-permeability to a liquid fuel.

There are no particular restrictions to the type of the porous membrane, and any type can be used, including a porous film, a woven fabric, an unwoven fabric, a paper and an inorganic membrane. Examples of a material for the porous membrane include thermoplastic resins, thermosetting resins, inorganic materials and a mixture thereof. A material for the porous membrane is preferably a thermoplastic resin in the light of not only easiness of production but also higher adhesion strength to a cation-exchange resin described later.

Examples of a thermoplastic resin include polyolefin resins such as homopolymers or copolymers of an α-olefin

including ethylene, propylene, 1-butene, 1-pentene, 1-hexene, 3-methyl-1-butene, 4-methyl-1-pentene and 5-methyl-1-heptene; vinyl chloride resins such as polyvinyl chloride, vinyl chloride-vinyl acetate copolymers, vinyl chloride-vinylidene chloride copolymers and vinyl chloride-olefin copolymers; fluororesins such as polytetrafluoroethylene, polychlorotrifluoroethylene, polyvinylidene fluoride, tetrafluoroethylene-hexafluoropropylene copolymers, tetrafluoroethylene-perfluoroalkyl vinyl ether copolymers, tetrafluoroethylene-ethylene copolymers; polyamide resins such as Nylon 6 and Nylon 66; and so-called engineering plastics such as polyimides, polysulfones and polyether ketones.

Among these thermoplastic resins, a polyolefin resin is preferable because a thermoplastic resin has of excellent mechanical strength, chemical stability and chemical resistance and good affinity to a hydrocarbon ion-exchange resin.

Among polyolefin resins, a polyethylene or polypropylene resin is preferable, a polyethylene resin is most preferable.

The above porous membrane can be also produced, for example, as described in Japanese published unexamined application Nos. 1997-216964 and 2002-338721. Alternatively, it may be commercially available, including "Hipore" from Asahi Chemical Industry Co., Ltd., "U-pore" from Ube Industries, Ltd., "Setera" from Tonen Tapils Co., Ltd., "Expole" from Nitto Denko Corporation and "Hilet" from Mitsui Chemicals, Inc.

Contact of a polymerizable composition with a porous membrane

A polymerizable composition can be brought into contact with a porous membrane by any method as long as the polymerizable composition can enter the voids in the porous membrane, resulting in contact between these. For example, the polymerizable composition may be applied or sprayed to the porous membrane, and alternatively, the porous membrane can be immersed in the polymerizable composition.

when the porous membrane is immersed in the polymerizable composition for contact between them, an immersion time depends on the type of the porous membrane and the composition of the polymerizable composition, and generally 0.1 sec to ten and several minutes.

Polymerization

Then, the polymerizable composition filling the voids in the porous membrane is polymerized. There are no particular restrictions to a polymerization method and a known method can be appropriately applied depending on the composition of polymerizable monomers used and the type of the polymerization initiator. When an organic peroxide is used as a polymerization initiator, polymerization by heating (thermal polymerization) is generally used. This method is more preferable than any other polymerization methods because of easiness in operation and achieving relatively homogeneous polymerization.

Preferably, polymerization is conducted after the porous membrane filled with the polymerizable composition is covered by a film such as a polyester film. Covering the porous membrane with a film can prevent from interfering polymerization by oxygen. Furthermore, an excessive polymerizable composition is eliminated from the porous membrane to produce a thin and even membrane for a fuel cell with a flat surface.

For thermal polymerization, there are no particular restrictions to a polymerization temperature and known temperature conditions may be selected as appropriate. Generally, a polymerization temperature is 50 to 150 °C, preferably 60 to 120 °C. A polymerization time is preferably 10 min to 10 hours.

Introduction of an anion-exchanae group

Subsequently, a quaternary ammonium group is introduced as an anion-exchange group into a membranous polymer consisting of a porous membrane and a resin cured product prepared by polymerizing the polymerizable composition filling the voids in the porous membrane produced as described above.

Introduction of a quaternary ammonium group means conversion of a halogenoalkyl group in the above resin cured product filling the voids in the porous membrane into a quaternary ammonium group. This halogenoalkyl group is derived from a halogenoalkyl group in an aromatic polymerizable monomer contained in the polymerizable composition.

An exemplary method for converting a halogenoalkyl group into a quaternary ammonium group is reacting of an aminating agent such as trimethylamine, triethylamine, tripropylamine, tributylamine and ethyldimethylamine with the halogenoalkyl group in the membraneous polymer prepared above. This reaction for introducing a quaternary ammonium group per se is well-known.

In a membrane to which an anion-exchange group has been introduced as described above, it is preferable to exchange a counter ion of the anion-exchange group into hydroxide ion. Specifically, exchange of a counter ion is conducted by immersing the membrane to which an anion-exchange group has been introduced, in an aqueous solution of sodium hydroxide, or potassium hydroxide.

A concentration of such a hydroxide is, but not limited to, 0.1 to 2 mol/L, an immersion temperature is 5 to 60 °C, and

an immersion time is 0.5 to 24 hours. When the counter-ion exchanged membrane is incorporated into an electric cell, conductivity of hydroxide ions is increased to allow a higher output to be obtained and poisoning of the catalyst in the electrode can be avoided. Regarding the counter ions exchanged to hydroxide-ion, when being exposed to the air, the membrane generally absorbs carbon dioxide in the air so that the counter ions, that is, hydroxide ions, are rapidly replaced by carbonate ions ($CO_3^{2-}$), which are then converted into bicarbonate ions ($HCO_3^-$). Therefore, in the membrane of the present invention in which the counter ions have been exchanged to hydroxide ions and which has been placed in the air for an adequate period, some or all of the hydroxide ions have been generally replaced by carbonate ions ($CO_3^{2-}$) and/or bicarbonate ions ($HCO_3^-$) when it is incorporated into a cell for initiating operation.

Second manufacturing process

In addition to the first manufacturing process, a membrane of the present invention can be also manufactured by the following second manufacturing process.

A membrane manufactured by the second manufacturing process is a membrane having a hydroxy group as an inert group.

In the second manufacturing process, first, the pores in a void membrane are filled with a polymerizable composition containing an aromatic polymerizable monomer having an alkoxy or acyloxy group and then the polymerizable composition filling in the voids are polymerized. Next, the alkoxy or acryloxy group in the resin cured product prepared by the polymerization of the polymerizable composition is converted into a hydroxy group by hydrolysis. This hydroxy group is inert to a subsequent reaction for converting a quaternary ammonium group. Then, a reaction for converting a halogenoalkyl group in the resin cured product into a quaternary ammonium group is conducted to provide a membrane of this invention having a hydroxy group as an inert group.

Polymerizable composition

In the second manufacturing process, a polymerizable composition as a starting material contains a) an aromatic polymerizable monomer, b) a crosslinkable polymerizable monomer and c) a polymerization initiator as essential components.

Here, b) a crosslinkable polymerizable monomer and c) a polymerization initiator as essential components are as detailed for the first manufacturing process and are not, therefore, described.

There will be described a) an aromatic polymerizable monomer. A content of each component is as detailed in the first manufacturing process. However, in the second manufacturing process, a content of b) a crosslinkable polymerizable monomer is particularly preferably 5 to 30 % by weight, most preferably 7 to 30 % by weight to the total amount of the polymerizable monomers contained in the polymerizable composition in the light of producing a membrane with excellent non-permeability of a liquid fuel and a further lower membrane resistance.

a) Aromatic polymerizable monomer

In the second manufacturing process, a) an aromatic polymerizable monomer is an aromatic polymerizable monomer having an aromatic ring to which one polymerizable group, at least one halogenoalkyl group and at least one alkoxy and/or acyloxy group are attached.

This aromatic polymerizable monomer is represented by chemical formula (3).

[Chem. 3]

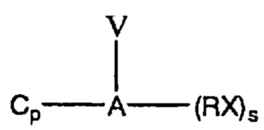

(3)

Here, V, A, RX, p and s are as defined in chemical formula (1).

C represents an alkoxy or acyloxy group.

In the above aromatic polymerizable monomer (3), a monomer in which at least one alkoxy group is attached to an aromatic ring is identical to the monomer described for the first manufacturing process, in which at least one alkoxy group is attached to an aromatic ring.

In the monomer in which at least one acyloxy group is attached to an aromatic ring, the acyloxy group is represented by the following formula.

[Chem. 4]

$$R^1—CO—O— \qquad (4)$$

Here, $R^1$ is an alkyl group preferably having 1 to 15 carbon atoms.

Specific examples of the acyloxy group include acetoxy, ethyloxy, n-propyloxy, n-butyroxy, iso-butyroxy, ter-butoxy, butyroxy, pentyloxy and n-decanyloxy. Among these acyloxy groups, an acyloxy group having 1 to 2 carbon atoms is preferable and acetoxy is particularly preferable in the light of easiness in converting it into hydroxy by hydrolysis.

The aromatic polymerizable monomer is particularly preferably a monocyclic aromatic polymerizable monomer represented by chemical formula (5).

[Chem. 5]

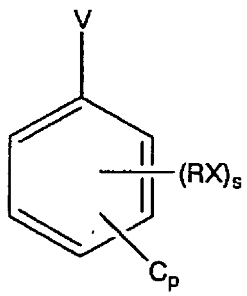

(5)

Examples of a monocyclic aromatic polymerizable monomer having an acyloxy group include 2-acetoxy-4-chloromethylstyrene, 3-acetoxy-4-chloromethylstyrene, 2-acetoxy-3-chloromethylstyrene, 2-acetoxy-5-chloromethylstyrene, 4-acetoxy-3-chloromethylstyrene, 4-acetoxy-2-chloromethylstyrene, 4-ethyloxy-3-chloromethylstyrene, 2-acetoxy-4-chloroethylstyrene, 2-acetoxy-4-chloropropylstyrene, 2-acetoxy-4-bromomethylstyrene, 2-acetoxy-4-bromoethylstyrene, 2-acetoxy-4-bromobutylstyrene, 2-acetoxy-4-iodomethylstyrene and 2-pentyloxy-4-chloromethylstyrene.

Examples of a bicyclic aromatic polymerizable monomer having an acyloxy group include 1-vinyl-3-acetoxy-4-chloromethylnaphthalene, 1-vinyl-6-acetoxy-4-chloromethylnaphthalene, 2-vinyl-4-acetoxy-6-chloromethylnaphthalene, and 2-vinyl-5-acetoxy-6-chloromethylnaphthalene.

Examples of a tricyclic aromatic polymerizable monomer having an acyloxy group include 1-vinyl-3-acetoxy-4-chloromethylanthracene, 1-vinyl-5-acetoxy-4-chloromethylanthracene, 2-vinyl-4-acetoxy-6-chlor omethylanthracene, and 2-vinyl-5-acetoxy-6-chloromethylanthracene.

Porous membrane

A porous membrane can be used the same porous membrane as described in the first manufacturing process.

Contact between a polymerizable composition and a porous membrane

Contact between a polymerizable composition and a porous membrane can be as described in the first manufacturing process.

Polymerization

By contacting the polymerizable composition with the porous membrane, the polymerizable composition filling the voids in the porous membrane is then polymerized. A polymerization method is as described in the first manufacturing

process.

Conversion into a hydroxy group

The cured polymer obtained by the above polymerization is then hydrolyzed. By this hydrolysis, an alkoxy or acyloxy group is converted into a hydroxy group. The converted hydroxy group is an inert group which is inert to a reaction for converting a quaternary ammonium group.
The alkoxy group can preferably be converted into a hydroxy group as usual, by hydrolyzing the alkoxy group by hydrogen halide such as hydrobromic acid or hydrogen iodide. Specifically, the cured polymer is treated with a hydrobromic acid solution of ketone or alcohol. A concentration of the hydrogen halide is preferably 0.1 to 5 mol/L and a processing temperature is preferably 20 to 90 °C. A processing time is preferably 5 to 48 hours.
An acyloxy group can be converted into a hydroxy group by a usual ester hydrolysis method. Specifically, the resin cured product is treated by an aqueous solution of an alkaline or acidic substance or a solution of an alkaline or acidic substance in a mixture such as water and an alcohol or water and a ketone.
Examples of the alkaline substance include hydroxides of an alkali metal or alkaline earth metal such as sodium hydroxide and calcium hydroxide. Examples of the acidic substance include hydrochloric acid and sulfuric acid.
A concentration of the acidic or alkaline substance in hydrolysis is preferably 0.1 to 5 mol/L when sodium hydroxide is used, and a processing temperature is preferably 5 to 24 hours. Such hydrolysis condition are well-known in the art.

Introduction of an anion-exchange group

Next, a quaternary ammonium group is introduced in the resin cured product having a converted hydroxy group as described above.
The quaternary ammonium group is introduced in the aromatic ring in the resin cured product. This aromatic ring is derived from the aromatic ring in the aromatic polymerizable monomer contained in the polymerizable composition.
The quaternary ammonium group can be introduced as described for the first manufacturing process. In the membrane having the anion-exchange group thus introduced, it is preferable that a counter ion to the anion-exchange group is replaced by a hydroxide ion. A replacing method is as described for the first manufacturing process.

Membrane for a direct liquid fuel cell

The anion-exchange membrane prepared by the first and the second manufacturing processes in which the voids in the porous membrane are filled with the anion-exchange resin is, if necessary, washed and/or cut, and incorporated as usual into a fuel cell as a separation membrane for a direct liquid fuel cell.
The membrane for a direct liquid fuel cell of the present invention comprises a porous membrane and an ion-exchange resin filling the voids in the porous membrane. The ion-exchange resin has a structure in which aromatic rings are connected to a methylene main chain having a cross-linked structure. Furthermore, the aromatic ring has a quaternary ammonium group and an inert group which is inert to a reaction converting a halogenoalkyl group into a quaternary ammonium group. Specifically, it has a structure where voids in a porous membrane as a substrate are filled with an anion-exchange resin represented by chemical formula (6) or (7).
[Chem. 6]

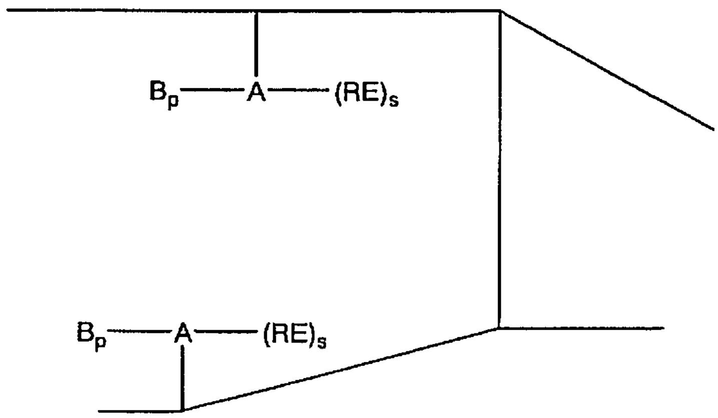

(6)

[Chem. 7]

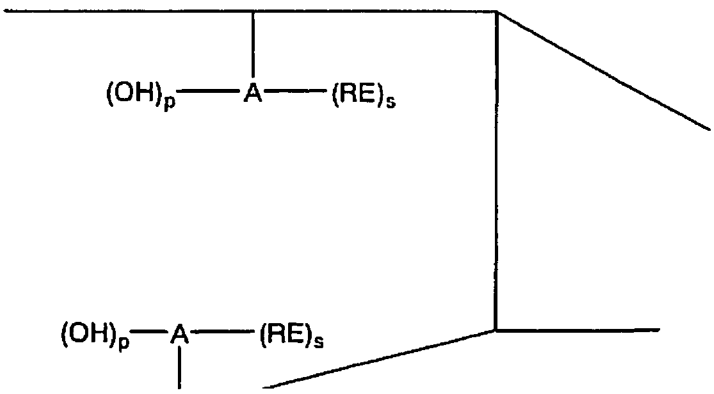

(7)

Chemical formula (6) represents the anion-exchange resin prepared by the first manufacturing process. "A" is an aromatic ring as described for chemical formula (1), which is connected to two methylene main chains drawn as straight lines. "p" and "s" are also as described for chemical formula (1). An inert group B which is inert to a reaction forming a quaternary ammonium group is also as described for chemical formula (1) and is suitably selected from the group consisting of alkyl, halogen and alkoxy.

Chemical formula (7) represents an anion-exchange resin prepared by the second manufacturing process.

The anion-exchange resin represented by chemical formulas (6) and (7) has a cross-linked structure linking the methylene main chains. In chemical formulas (6) and (7), two upper and lower lines which horizontally extend represent methylene chains, and together with a vertical line linking the methylene main chains, schematically show a crosslinked chain.

There are no particular restrictions to the type of the crosslinked chain and any type can be used as long as methylene main chains are mutually cross-linked. It is preferable that the type of the crosslinked chain is appropriately selected, taking non-permeability of a liquid fuel in a membrane and reduction in an electric resistance into account.

In general, a crosslinked chain having a structure derived from the crosslinkable polymerizable monomer commonly used as a crosslinking agent in polymerization is employed. An example of a preferable crosslinked chain is a crosslinked chain derived from divinylbenzene as obvious from the description for the crosslinkable polymerizable monomer.

Chemical formulas (8) and (9) show a chemical structure of an anion-exchange resin particularly preferable as a membrane for a direct liquid fuel cell of the present invention.

[Chem. 8]

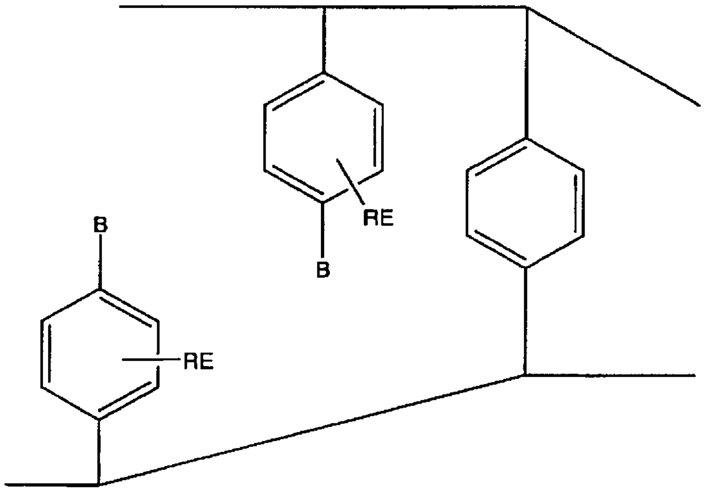

(8)

[Chem.9]

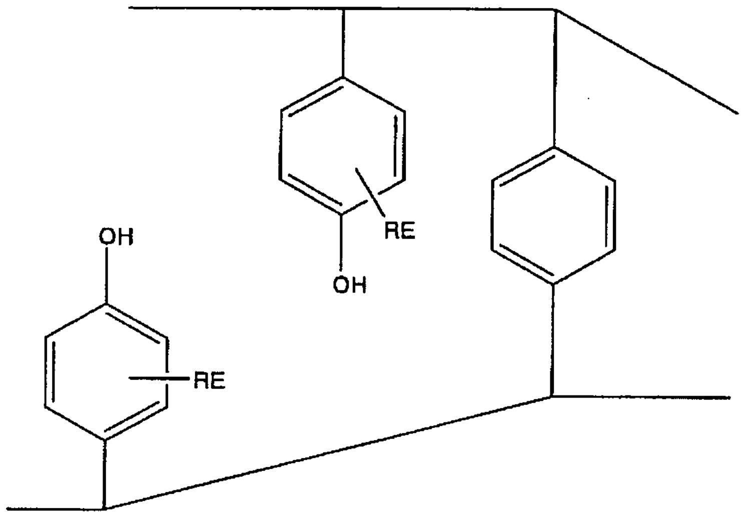

(9)

In the anion-exchange resin represented by chemical formulas (8) and (9), a particularly preferable anion-exchange resin has a structure in which methylene chains represented by two horizontal straight lines are bridged by a diethylbenzene skeleton unit and a trimethylammonium group is attached to a benzene ring as an RE.

A molar ratio of the diethylbenzene skeleton unit as a crosslinked chain to a unit having a benzyl moiety with a trimethylammonium group is preferably 1:99 to 40:60, more preferably 2:98 to 30:70, converted from a suitable compounding ratio in the polymerizable composition in the above manufacturing process. A molar ratio of trimethylammonium to the inert group B is 1:1.

The inert group contained in the anion-exchange resin may be identified by observing its characteristic absorption peaks by appropriate analytical means such as infrared spectroscopy. For example, when the inert group is an alkoxy group, its presence can be identified by absorption peaks at 1030 $cm^{-1}$ and 1245 $cm^{-1}$ which are characteristic based on an ether structure -C-O-C-. When the inert group is a halogen atom, for example, a chlorine atom, it is identified by an absorption peak at 1090 $cm^{-1}$ which is characteristic based on an aromatic C-Cl. Furthermore, by adding a proper internal standard to the resin, the quantity of these inert groups can be determined.

The membrane for a direct liquid fuel cell of the present invention has a high anion-exchange capacity of generally 0.1 to 3 mmol/g, particularly 0.5 to 2 mmol/g by usual analysys. The membrane produced by the second manufacturing process particularly preferably has an anion-exchange capacity of 0.1 to 1.8 mmol/g.

Since the membrane of the present invention has a high anion-exchange capacity as described above, a fuel

cell employing this membrane has a high cell output and sufficiently low fuel-liquid permeability and membrane electric resistance.

The membrane of the present invention employs a polymerizable composition having the above particular composition. As a result, a water content of the membrane is kept to be generally 5 to 90 % by weight, more suitably 10 to 80 % by weight. The membrane is, therefore, resistant to increase in an electric resistance due to drying, that is, conductivity of hydroxide ions is reluctant to be lowered.
Furthermore, it is insoluble in a fuel liquid.

An electric resistance is, as determined as an electric resistance in a 0.5 mol/L aqueous solution of NaCl, generally 0.40 Ω .$cm^2$ or less, preferably 0.25 Ω ·$cm^2$ or less, which is very small.

Furthermore, the present membrane has a very small fuel-liquid permeability. For example, when the membrane is in contact with 30 % methanol at 25 °C., a permeability of methanol in the membrane is generally 1000 $g/m^2{\cdot}hr$ or less, preferably in the range of 10 to 700 $g/m^2{\cdot}hr$.

The membrane for a fuel cell of the present invention has a low electric resistance and a low fuel-liquid permeability, and therefore, when being used as a membrane for a direct liquid fuel cell, it can effectively prevent a fuel liquid fed to a fuel chamber from permeating the membrane and diffusing to the opposite chamber. It results in a cell giving a higher output. A direct liquid fuel cell employing this membrane is generally a fuel cell having the basic structure shown in FIG. 1. It can be, however, incorporated in a direct liquid fuel cell having another known structure.

The fuel liquid is most commonly methanol, and when it is methanol, the present invention can be most prominently effective. Examples of an alternative fuel liquid include ethanol, ethyleneglycol, dimethyl ether, hydrazine, ammonia and sodium borohydrate, and for all of these fuel liquids, the present invention is equally effective. Furthermore, the fuel can be, in addition to a liquid, a gas such as hydrogen gas.

## EXAMPLES

There will be specifically described the present invention with reference to Examples, but the present invention is not limited to these examples in any manner.

In Examples and Comparative Examples, an anion-exchange capacity, a water content, a membrane resistance and a methanol permeability of a membrane (anion-exchange membrane) and a fuel cell output voltage were determined for evaluating properties of a membrane for a fuel cell. The methods for determining these will be described below.

### 1) Determination of an anion-exchange capacity and a water content

An ion-exchange membrane was immersed in a 0.5 mol/L aqueous solution of NaCl for 10 or more hours to be converted to a chloride ion type. Then, the ion-exchange membrane was converted to a nitrate ion type by a 0.2 mol/L aqueous solution of $NaNO_3$, and chloride ions liberated during the process were quantified with an aqueous silver nitrate using a potentiometric titrator (COMTITE-900, Hiranuma Sangyo Co., Ltd.) (A mol). Next, an identical ion-exchange membrane was immersed in a 0.5 mol/L aqueous solution of NaCl for 4 or more hours. Then, the immersed ion-exchange membrane was thoroughly washed with ion-exchanged water. Water on the surface of the ion-exchange membrane was wiped away by a tissue paper, and a wet weight (Wg) was measured. Then, the ion-exchange membrane was dried under vacuum at 60 °C for 5 hours, and its weight was measured (Dg). Using these measured values, an ion-exchange capacity and a water content were calculated from the following equations.

$$\text{Ion-exchange capacity} = A \times 1000/D\ [\text{mmol/g-dry weight}]$$

$$\text{Water content} = 100 \times (W\text{-}D)/D\ [\%]$$

### 2) Membrane resistance

An anion-exchange membrane was placed at the center of a two-chamber cell having two chambers each of which had a platinum electrode, to separate these chambers. These cells were filled with a 0.5 mol/L aqueous solution of NaCl with temperature of 25 °C. On both sides of the anion-exchange membrane were provided Luggin capillaries for liquid junction with a reference electrode via a salt bridge. A potential when electric current of 100 $mA/cm^2$ was applied between the platinum electrodes with the intervening membrane (a V) and a potential when electric current of 100 $mA/cm^2$ was applied between the platinum electrodes without the intervening membrane (b V) were measured. An

electric resistance of the anion-exchange membrane was determined from the following equation.

$$\text{Electric resistance} = 1000 \times (a \cdot b)/100 [\Omega cm^2]$$

3) Methanol permeability

A membrane was incorporated in a fuel cell (membrane area: 5 $cm^2$), and an aqueous methanol solution at a concentration of 30 % by weight was fed to a fuel chamber using a pump for liquid chromatography to feed an eluent. Argon gas was supplied into an oxidizing-agent chamber at 300 ml/min. A thermostatic bath was used and measurement was conducted at temperature of 25 °C. Argon gas discharged from the oxidizing-agent chamber was introduced into a gas trap. A methanol concentration in the argon gas trapped by the gas trap was measured by gas chromatography and then the amount of methanol permeating the membrane was determined.

4) Fuel cell output voltage

A solution of an anion-exchange resin in tetrahydrofuran (resin concentration: 5 % by weight) was mixed with carbon black supporting an alloy catalyst of platinum and ruthenium (ruthenium: 50 mol%) in 50 % by weight to prepare a catalyst mixture.

Then, a carbon paper having a thickness of 100 μm and a porosity of 80 % was prepared, which had been made water-repellent by polytetrafluoroethylene. On the surface of this carbon paper was applied the above catalyst mixture, which was then dried under vacuum at 80 °C for 4 hours, to provide a gas diffusion electrode. The application rate of the catalyst was 2 mg/$cm^2$.

Next, on both sides of a membrane for a fuel cell to be measured were set the above gas diffusion electrodes, and the product was heat-pressed at 100 °C under a pressure of 5 MPa for 100 sec and then left at room temperature for 2 min. The product was incorporated in a fuel cell having the structure shown in FIG. 1. While a temperature of the fuel cell was set to be 50 °C and a 10 % by weight aqueous methanol solution and oxygen at an ambient pressure in 200 mL/min were fed to the fuel and the oxidizing-agent chambers, respectively, an electric generation test was conducted. A terminal voltage of the cell at a electric current density of 0 A/$cm^2$ and 0.1 A/$cm^2$ was measured.

First manufacturing process

Examples 1 to 9

In accordance with the formulation shown in Table 1, monomers and others were mixed to prepare a monomer composition. In any system, an epoxy compound (trade name: EPOLIGHT 40E, Kyoeisha Chemical Co., Ltd.) as a hydrogen-chloride scavenger was added in 5 % by weight to the total amount of the monomer mixture. Then, 400 g of the monomer composition thus prepared was placed in a 500 mL glass vessel, and the porous membrane (made of a polyethylene having a weight-average molecular weight of 250,000, film thickness: 25 μm, average pore size: 0.03 μm, porosity: 37 %) shown in Table 1 was immersed in the monomer composition for 5 min.

The porous membrane was removed from the monomer composition, and both sides of the porous membrane was covered using a polyester film with a thickness of 100 μm as a release material, and then the product was heated under a nitrogen pressure of 3 kg/$cm^2$ at 80 °C for 5 hours to polymerize the monomers.

The membraneous resin cured product thus prepared was immersed in an aqueous solution containing 6 % of trimethylamine and 25 % of acetone at room temperature for 16 hours, to give a membrane for a fuel cell. This membrane was immersed in a 0.5 mol/L aqueous solution of sodium hydroxide at 25 °C for 5 hours and chloride ions as counter ions of the anion-exchange group were replaced with hydroxide ions, and the product was left in the air at room temperature for 10 hours or more.

An anion-exchange capacity, a water content, a membrane resistance, a film thickness, a methanol permeability of the membrane for a fuel cell prepared and an output voltage of a fuel cell when the membrane was incorporated in a fuel cell were measured. The results are shown in Table 2.

Second manufacturing process

Examples 10 and 11

In accordance with the formulation shown in Table 1, monomers and others were mixed to prepare a monomer

composition. Using the monomer composition, a membraneous resin cured product was prepared as described for the first manufacturing process.

In a 500 mL glass vessel were placed 100 mL of a 3 mol/L aqueous solution of sodium hydroxide and 100 mL of methanol. The resin cured product prepared was immersed in this mixed solution and was reacted in a closed system at 50 °C for 24 hours, converting acetoxy to hydroxy.

After the reaction, the resin cured product having the converted hydroxy group was immersed in an aqueous solution of 6 % of trimethylamine and 25 % of acetone at room temperature for 16 hours, to give a membrane for a fuel cell. This membrane was immersed in a 0.5 mol/L aqueous sodium hydroxide solution at 25 °C for 5 hours for replacing the counter ions of the anion-exchange group with hydroxide ions, and then the product was left for 10 hours or more in the air at room temperature.

An anion-exchange capacity, a water content, a membrane resistance, a film thickness, a methanol permeability of the membrane for a fuel cell prepared and an output voltage of a fuel cell when the membrane was incorporated in a fuel cell were measured. The results are shown in Table 2.

<u>Comparative Examples 1 and 2</u>

The process for Examples 1 to 9 was conducted except the monomer composition and a porous membrane shown in Table 1 are used to prepare a membrane for a fuel cell.

An anion-exchange capacity, a water content, a membrane resistance, a film thickness, a methanol permeability of the membrane for a fuel cell prepared and an output voltage of a fuel cell when the membrane was incorporated in a fuel cell were measured. The results are shown in Table 2.

[Table 1]

Table 1

| Example No. | Composition (parts by weight) | | | | | | | | | | |
|---|---|---|---|---|---|---|---|---|---|---|---|
| | 4M[1)] | 3M[2)] | 4Bu[3)] | 4Cl[4)] | 4Br[5)] | 4MO[6)] | 4BO[7)] | 4Ac[8)] | CMS[9)] | DVB[10] | PO[11)] |
| 1 | 98 | | | | | | | | | 2 | 5 |
| 2 | | 98 | | | | | | | | 2 | 5 |
| 3 | | | 98 | | | | | | | 2 | 5 |
| 4 | | | | 98 | | | | | | 2 | 5 |
| 5 | | | | | 98 | | | | | 2 | 5 |
| 6 | | | | | | 98 | | | | 2 | 5 |
| 7 | | | | | | | 98 | | | 2 | 5 |
| 8 | 80 | | | | | | | | 18 | 2 | 5 |
| 9 | 60 | | | | | | | | 38 | 2 | 5 |
| 10 | | | | | | | | 95 | | 5 | 5 |
| 11 | | | | | | | | 90 | | 10 | 5 |
| Comparative Example 1 | | | | | | | | | 98 | 2 | 5 |
| Comparative Example 2 | | | | | | | | | 90 | 10 | |

1) 4M: 4-methyl-3-chloromethylstyrene
2) 3M: 3-methyl-4-chloromethylstyrene
3) 4Bu: 4-butyl-3-chloromethylstyrene
4) 4Cl: 4-chloro-3-chloromethylstyrene
5) 4Br: 4-bromo-3-chloromethylstyrene
6) 4MO: 4-methoxy-3-chloromethylstyrene
7) 4BO: 4-butoxy-3-chloromethylstyrene
8) 4Ac: 4-acetoxy-3-chloromethylstyrene
9) CMS: 4-chloromethylstyrene
10) DVB: divinylbenzene
11) PO: t-butyl peroxyethylhexanoate

Table 2

| Example No. | Anion-exchange capacity [mmol/g-dry membrane] | Water content [%] | Membrane resistance [$\Omega \cdot cm^2$] | Film thickness [$\mu m$] | Methanol permeability [$g/(m^2 \cdot hr)$] | Fuel-cell output voltage[V] | |
|---|---|---|---|---|---|---|---|
| | | | | | | 0 A/cm$^2$ | 0.1 A/cm$^2$ |
| 1 | 2.0 | 42 | 0.08 | 28 | 280 | 0.82 | 0.29 |
| 2 | 2.0 | 38 | 0.09 | 27 | 330 | 0.81 | 0.28 |
| 3 | 1.9 | 41 | 0.14 | 28 | 300 | 0.79 | 0.26 |
| 4 | 1.8 | 42 | 0.13 | 28 | 320 | 0.78 | 0.27 |
| 5 | 1.9 | 37 | 0.11 | 27 | 340 | 0.79 | 0.25 |
| G | 1.9 | 39 | 0.11 | 27 | 330 | 0.81 | 0.26 |
| 7 | 1.8 | 36 | 0.13 | 27 | 310 | 0.80 | 0.24 |
| 8 | 1.9 | 35 | 0.08 | 27 | 450 | 0.77 | 0.28 |
| 9 | 1.8 | 43 | 0.09 | 28 | 600 | 0.76 | 0.23 |
| 10 | 1.7 | 38 | 0.08 | 27 | 350 | 0.80 | 0.26 |
| 11 | 1.6 | 27 | 0.15 | 26 | 320 | 0.79 | 0.23 |
| Comparative Example 1 | 2.1 | 53 | 0.08 | 28 | 690 | 0.75 | 0.20 |
| Comparative Example 2 | 1.7 | 19 | 0.25 | 26 | 380 | 0.78 | 0.13 |

## Claims

1. A process for manufacturing a membrane for direct liquid fuel cell comprising a porous membrane and a cross-linked anion-exchange resin filling the pores in the porous membrane, wherein said cross-linked anion-exchange resin has a methylene main chain having a cross-linked structure and an aromatic ring attached to said methylene main chain and said aromatic ring has an inert group which is inert to a reaction converting a halogenoalkyl group into a quaternary ammonium group and a quaternary ammonium group, comprising
contacting the porous membrane into contact with a polymerizable composition comprising

   a) an aromatic polymerizable monomer having an aromatic ring to which one polymerizable group, at least one halogenoalkyl group and an inert group which is inert to a reaction converting said at least one halogenoalkyl group into a quaternary ammonium group,
   b) a crosslinkable polymerizable monomer, and
   c) a polymerization initiator;
   to fill the pores of the porous membrane with said polymerizable composition;
   then curing said polymerizable composition by polymerization to give a resin cured product; and
   then converting said halogenoalkyl group in said resin cured product into a quaternary ammonium group.

2. The process for manufacturing a membrane for a direct liquid fuel cell as claimed in Claim 1, wherein the inert group which is inert to the reaction converting the halogenoalkyl group into a quaternary ammonium group is selected from the group consisting of an alkyl group, a halogen atom and an alkoxy group.

3. The process for manufacturing a membrane for a direct liquid fuel cell as claimed in Claim 1, wherein the aromatic polymerizable monomer is a monocyclic aromatic polymerizable monomer.

4. The process for manufacturing a membrane for a direct liquid fuel cell as claimed in Claim 3, wherein the monocyclic

aromatic polymerizable monomer has a styrene skeleton.

5. A process for manufacturing a membrane for direct liquid fuel cell comprising of a porous membrane and a cross-linked anion-exchange resin filling the voids in said porous membrane, wherein said cross-linked anion-exchange resin has a methylene main chain having a cross-linked structure and an aromatic ring attached to said methylene main chain and said aromatic ring has a hydroxy group and a quaternary ammonium group, comprising
contacting the porous membrane into contact with a polymerizable composition comprising

a) an aromatic polymerizable monomer having an aromatic ring to which one polymerizable group, at least one halogenoalkyl group and at least one alkoxy and/or acyloxy group,
b)a crosslinkable polymerizable monomer, and
c) a polymerization initiator;
to fill the pores of the porous membrane with said polymerizable composition;
then curing said polymerizable composition by polymerization to give a resin cured product;
then hydrolyzing an alkoxy or acyloxy group attached to said resin cured product to convert said alkoxy or acyloxy group to a hydroxy group; and
then converting said halogenoalkyl group attached to said resin cured product into a quaternary ammonium group.

6. The process for manufacturing a membrane for a direct liquid fuel cell as claimed in Claim 5, wherein the aromatic polymerizable monomer is a monocyclic aromatic polymerizable monomer.

7. The process for manufacturing a membrane for a direct liquid fuel cell as claimed in Claim 6, wherein the monocyclic aromatic polymerizable monomer has a
styrene skeleton.

8. A membrane for direct liquid fuel cell consisting of a porous membrane and a cross-linked anion-exchange resin filling the pores in said porous membrane, wherein said anion-exchange resin has a methylene main chain having a cross-linked structure and an aromatic ring attached to said methylene main chain and said aromatic ring has an inert group which is inert to a reaction converting a halogenoalkyl group into a quaternary ammonium group and a quaternary ammonium group.

9. The membrane for a direct liquid fuel cell as claimed in Claim 8, wherein the inert group in the reaction converting into a quaternary ammonium group is an alkoxy group.

10. The membrane for a direct liquid fuel cell as claimed in Claim 8, wherein the inert group in the reaction converting into a quaternary ammonium group is a halogen atom.

11. The membrane for a direct liquid fuel cell as claimed in Claim 8, wherein the inert group in the reaction converting into a quaternary ammonium group is an alkyl group.

12. The membrane for a direct liquid fuel cell as claimed in Claim 8, wherein the inert group in the reaction converting into a quaternary ammonium group is a hydroxy group.

13. The membrane for a direct liquid fuel cell as claimed in Claim 8, wherein the cross-linked structure is a cross-linked structure in which a diethylbenzene skeleton links methylene main chains.

**Patentansprüche**

1. Verfahren zur Herstellung einer Membran für eine Direkt-Flüssigbrennstoffzelle, umfassend eine poröse Membran und ein vernetztes Anionenaustauscherharz, das die Poren in der porösen Membran füllt, wobei das vernetzte Anionenaustauscherharz eine Methylen-Hauptkette mit vernetzter Struktur und einen an die Methylen-Hauptkette gebundenen aromatischen Ring aufweist, und der aromatische Ring eine inerte Gruppe, die gegenüber einer Reaktion inert ist, bei der eine Halogenalkylgruppe in eine quartäre Ammoniumgruppe überführt wird, und eine quartäre Ammoniumgruppe besitzt, umfassend
das In-Kontakt-Bringen der porösen Membran mit einer polymerisierbaren Zusammensetzung, umfassend

a) ein aromatisches polymerisierbares Monomer mit einem aromatischen Ring, der eine polymerisierbare Gruppe, wenigstens eine Halogenalkylgruppe und eine inerte Gruppe aufweist, die gegenüber einer Reaktion inert ist, bei der die wenigstens eine Halogenalkylgruppe in eine quartäre Ammoniumgruppe überführt wird,
b) ein vernetzbares polymerisierbares Monomer, und
c) einen Polymerisationsinitiator;
um die Poren der porösen Membran mit der polymerisierbaren Zusammensetzung zu füllen,
anschließendes Härten der polymerisierbaren Zusammensetzung durch Polymerisation, um ein gehärtetes Harzprodukt zu ergeben, und anschließendes Überführen der Halogenalkylgruppe in dem gehärteten Harzprodukt in eine quartäre Ammoniumgruppe.

**2.** Verfahren zur Herstellung einer Membran für eine Direkt-Flüssigbrennstoffzelle nach Anspruch 1, wobei die inerte Gruppe, die gegenüber einer Reaktion inert ist, bei der die Halogenalkylgruppe in eine quartäre Ammoniumgruppe überführt wird, ausgewählt ist aus der Gruppe bestehend aus einer Alkylgruppe, einem Halogenatom und einer Alkoxygruppe.

**3.** Verfahren zur Herstellung einer Membran für eine Direkt-Flüssigbrennstoffzelle nach Anspruch 1, wobei das aromatische polymerisierbare Monomer ein monocyclisches aromatisches polymerisierbares Monomer ist.

**4.** Verfahren zur Herstellung einer Membran für eine Direkt-Flüssigbrennstoffzelle nach Anspruch 3, wobei das monocyclische aromatische polymerisierbare Monomer ein Styrolgerüst aufweist.

**5.** Verfahren zur Herstellung einer Membran für eine Direkt-Flüssigbrennstoffzelle, umfassend eine poröse Membran und ein vernetztes Anionenaustauscherharz, das die Poren in der porösen Membran füllt, wobei das vernetzte Anionenaustauscherharz eine Methylen-Hauptkette mit vernetzter Struktur und einen an die Methylen-Hauptkette gebundenen aromatischen Ring aufweist, und der aromatische Ring eine Hydroxygruppe und eine quartäre Ammoniumgruppe aufweist, umfassend
das In-Kontakt-Bringen der porösen Membran mit einer polymerisierbaren Zusammensetzung, umfassend

a) ein aromatisches polymerisierbares Monomer mit einem aromatischen Ring, der eine polymerisierbare Gruppe, wenigstens eine Halogenalkylgruppe und wenigstens eine Alkoxy- und/oder Acyloxygruppe aufweist,
b) ein vernetzbares polymerisierbares Monomer, und
c) einen Polymerisationsinitiator;
um die Poren der porösen Membran mit der polymerisierbaren Zusammensetzung zu füllen,
anschließendes Härten der polymerisierbaren Zusammensetzung durch Polymerisation, um ein gehärtetes Harzprodukt zu ergeben,
anschließendes Hydrolysieren der Alkoxy- oder Acyloxygruppe, die an das gehärtete Harzprodukt gebunden ist, um die Alkoxy- oder Acyloxygruppe in eine Hydroxygruppe zu überführen; und
anschließendes Überführen der Halogenalkylgruppe, die an das gehärtete Harzprodukt gebunden ist, in eine quartäre Ammoniumgruppe.

**6.** Verfahren zur Herstellung einer Membran für eine Direkt-Flüssigbrennstoffzelle nach Anspruch 5, wobei das aromatische polymerisierbare Monomer ein monocyclisches aromatisches polymerisierbares Monomer ist.

**7.** Verfahren zur Herstellung einer Membran für eine Direkt-Flüssigbrennstoffzelle nach Anspruch 6, wobei das monocyclische aromatische polymerisierbare Monomer ein Styrolgerüst aufweist.

**8.** Membran für eine Direkt-Flüssigbrennstoffzelle, bestehend aus einer porösen Membran und einem vernetzten Anionenaustauscherharz, das die Poren in der porösen Membran füllt, wobei das Anionenaustauscherharz eine Methylen-Hauptkette mit vernetzter Struktur und einen an die Methylen-Hauptkette gebundenen aromatischen Ring aufweist, und der aromatische Ring eine inerte Gruppe, die gegenüber einer Reaktion inert ist, bei der eine Halogenalkylgruppe in eine quartäre Ammoniumgruppe überführt wird, und eine quartäre Ammoniumgruppe besitzt.

**9.** Membran für eine Direkt-Flüssigbrennstoffzelle nach Anspruch 8, wobei die inerte Gruppe bei der in eine quartäre Ammoniumgruppe überführenden Reaktion eine Alkoxygruppe ist.

**10.** Membran für eine Direkt-Flüssigbrennstoffzelle nach Anspruch 8, wobei die inerte Gruppe bei der in eine quartäre Ammoniumgruppe überführenden Reaktion ein Halogenatom ist.

**11.** Membran für eine Direkt-Flüssigbrennstoffzelle nach Anspruch 8, wobei die inerte Gruppe bei der in eine quartäre Ammoniumgruppe überführenden Reaktion eine Alkylgruppe ist.

**12.** Membran für eine Direkt-Flüssigbrennstoffzelle nach Anspruch 8, wobei die inerte Gruppe bei der in eine quartäre Ammoniumgruppe überführenden Reaktion eine Hydroxygruppe ist.

**13.** Membran für eine Direkt-Flüssigbrennstoffzelle nach Anspruch 8, wobei die vernetzte Struktur eine vernetzte Struktur ist, bei der ein Diethylbenzolgerüst die Methylen-Hauptketten verknüpft.

**Revendications**

**1.** Procédé de fabrication d'une membrane pour une pile à combustible à liquide direct comprenant une membrane poreuse et une résine échangeuse d'anions réticulée remplissant les pores dans la membrane poreuse, dans lequel ladite résine échangeuse d'anions réticulée a une chaîne principale de méthylène ayant une structure réticulée et un noyau aromatique lié à ladite chaîne principale méthylène et ledit noyau aromatique comporte un groupe inerte qui est inerte dans une réaction transformant un groupe halogénoalkyl en un groupe ammonium quaternaire et un groupe ammonium quaternaire, consistant à :

mettre en contact la membrane poreuse avec une composition polymérisable comprenant :

a) un monomère aromatique polymérisable comportant un noyau aromatique auquel un groupe polymérisable est lié, au moins un groupe halogénoalkyl et un groupe inerte qui est inerte dans une réaction transformant ledit au moins un groupe halogénoalkyl en un groupe ammonium quaternaire,
b) un monomère polymérisable pouvant être réticulé et
c) un amorceur de polymérisation,

pour remplir les pores de la membrane poreuse avec ladite composition polymérisable,
puis durcir ladite composition polymérisable par polymérisation pour fournir un produit durci de résine,
et ensuite convertir ledit groupe halogénoalkyl dans ledit produit durci de résine en un groupe ammonium quaternaire.

**2.** Procédé de fabrication d'une membrane pour une pile à combustible à liquide direct selon la revendication 1, dans lequel le groupe inerte qui est inerte dans la réaction transformant le groupe halogénoalkyl en un groupe ammonium quaternaire est choisi parmi le groupe comprenant un groupe alkyl, un atome d'halogène et un groupe alcoxy.

**3.** Procédé de fabrication d'une membrane pour une pile à combustible à liquide direct selon la revendication 1, dans lequel le monomère aromatique polymérisable est un monomère aromatique polymérisable monocyclique.

**4.** Procédé de fabrication d'une membrane pour une pile à combustible à liquide direct selon la revendication 3, dans lequel le monomère aromatique polymérisable monocyclique a un squelette de styrène.

**5.** Procédé de fabrication d'une membrane pour une pile à combustible à liquide direct comprenant une membrane poreuse et une résine échangeuse d'anions réticulée remplissant les vides dans ladite membrane poreuse, dans lequel ladite résine échangeuse d'anions réticulée comporte une chaîne principale de méthylène ayant une structure réticulée et un noyau aromatique lié à ladite chaîne principale de méthylène et ledit noyau aromatique comporte un groupe hydroxy et un groupe ammonium quaternaire,
consistant à :

mettre en contact la membrane poreuse avec une composition polymérisable comprenant :

a) un monomère aromatique polymérisable comportant un noyau aromatique auquel un groupe polymérisable est lié, au moins un groupe halogénoalkyl et un groupe alcoxy et/ou acyloxy,
b) un monomère polymérisable pouvant être réticulé et
c) un amorceur de polymérisation,

pour remplir les pores de la membrane poreuse avec ladite composition polymérisable,
puis durcir ladite composition polymérisable par polymérisation pour fournir un produit durci de résine,

puis hydrolyser un groupe alcoxy ou acyloxy lié au dit produit durci de résine pour transformer ledit groupe alcoxy ou acyloxy en un groupe hydroxy,
et ensuite convertir ledit groupe halogénoalkyl lié au dit produit durci de résine en un groupe ammonium quaternaire.

**6.** Procédé de fabrication d'une membrane pour une pile à combustible à liquide direct selon la revendication 5, dans lequel le monomère aromatique polymérisable est un monomère aromatique polymérisable monocyclique.

**7.** Procédé de fabrication d'une membrane pour une pile à combustible à liquide direct selon la revendication 6, dans lequel le monomère aromatique polymérisable monocyclique a un squelette de styrène.

**8.** Membrane pour une pile à combustible à liquide direct constituée d'une membrane poreuse et d'une résine échangeuse d'anions réticulée remplissant les vides dans ladite membrane poreuse, dans laquelle ladite résine échangeuse d'anions comporte une chaîne principale de méthylène ayant une structure réticulée et un noyau aromatique lié à ladite chaîne principale de méthylène et ledit noyau aromatique comporte un groupe inerte qui est inerte dans une réaction transformant un groupe halogénoalkyl en un groupe ammonium quaternaire et un groupe ammonium quaternaire.

**9.** Membrane pour une pile à combustible à liquide direct selon la revendication 8, dans laquelle le groupe inerte dans la réaction de transformation en un groupe ammonium quaternaire est un groupe alcoxy.

**10.** Membrane pour une pile à combustible à liquide direct selon la revendication 8, dans laquelle le groupe inerte dans la réaction de transformation en un groupe ammonium quaternaire est un atome d'halogène.

**11.** Membrane pour une pile à combustible à liquide direct selon la revendication 8, dans laquelle le groupe inerte dans la réaction de transformation en un groupe ammonium quaternaire est un groupe alkyl.

**12.** Membrane pour une pile à combustible à liquide direct selon la revendication 8, dans laquelle le groupe inerte dans la réaction de transformation en un groupe ammonium quaternaire est un groupe hydroxy.

**13.** Membrane pour une pile à combustible à liquide direct selon la revendication 8, dans laquelle la structure réticulée est une structure réticulée dans laquelle un squelette de diéthylbenzène lie les chaînes principales de méthylène.

[Fig. 1]

Fig. 1

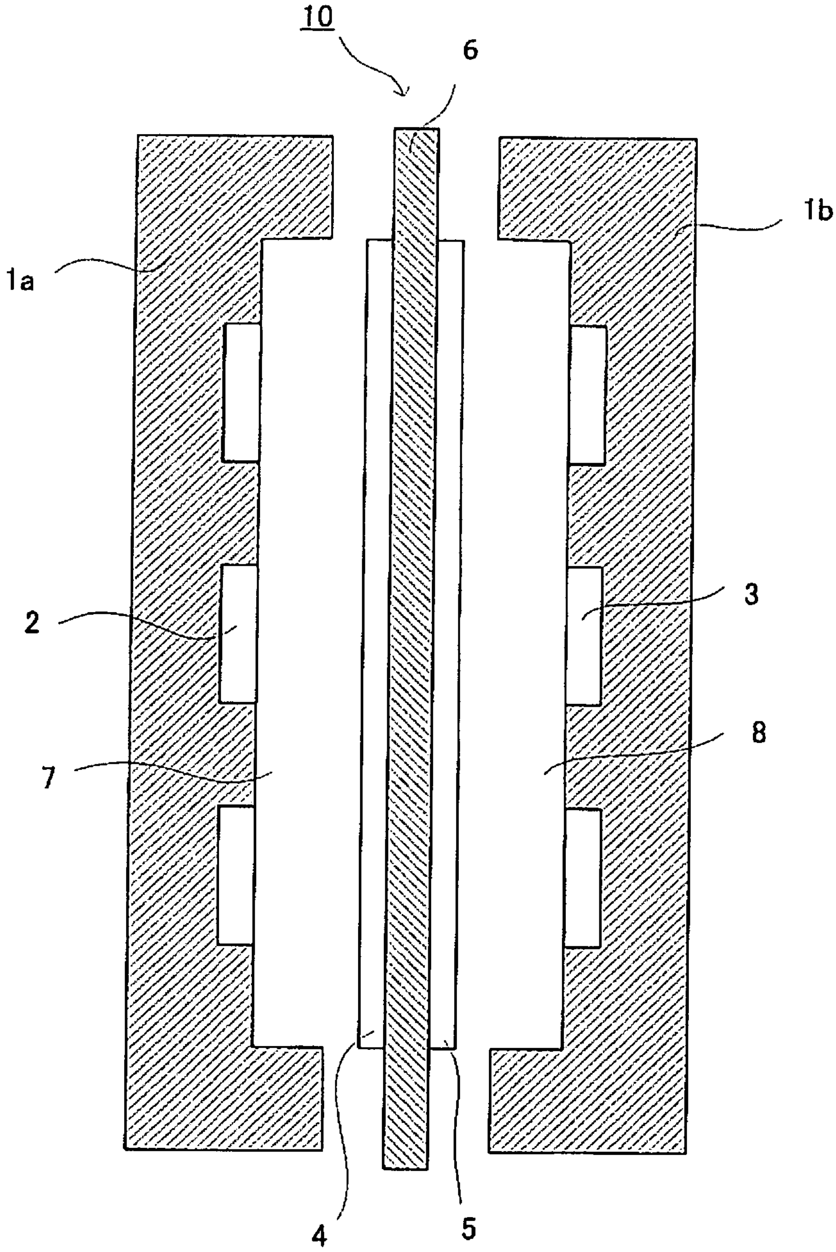

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11135137 A
- JP 11273695 A
- JP 2000331693 A
- JP 9216964 A
- JP 2002338721 A